# EUROPEAN PATENT APPLICATION

(11) **EP 4 847 897 A1**
(43) Date of publication of application: **02.12.2026**
(21) Application number: 25179870.8
(22) Date of filing: 30.05.2025
(51) Int. Cl.: G01M 11/00, G02B 6/02, G01B 11/24, G01B 11/26, C03B 37/025

(54) **DETECTING TWIST IN A HOLLOW-CORE FIBRE**

(71) Applicant: Microsoft Technology Licensing, LLC, Redmond, WA 98052 (US)
(72) Inventor: WILLIAMS, Matthew Ian Ronald, Redmond, 98052-6399 (US); MOCSAI, Bence Ferenc, Redmond, 98052-6399 (US); SANDOGHCHI, Seyed Reza, Redmond, 98052-6399 (US)
(74) Representative: CMS Cameron McKenna Nabarro Olswang LLP

(57) **Abstract**

A method of detecting a twist angle in a hollow core fiber is described. The method comprises receiving a micrograph of the hollow core fiber and determining a relative angle of twist of the hollow core fiber by comparing the micrograph to a model for the hollow core fiber. The model is generated from a sinogram of a reference hollow core fiber.

## Description

### BACKGROUND

Hollow Core Fibers are a new class of optical fibers. In contrast to traditional solid core fibers, light is guided in a hollow central core rather than solid glass. Hollow core fibers provide numerous benefits compared to solid core fibers such as reduced optical propagation loss, increased signal propagation speed, wider optical transmission bandwidth and reduced parasitic nonlinear optical effects. Hollow core fibers can also withstand higher damage thresholds compared to solid core fibers.

Optical fibers are utilized for high-capacity data transmission over long distances and are becoming increasingly important as consumers and businesses become reliant on network services and cloud storage and computing resources. The key advantages provided by hollow core fibers compared to solid core fibers, as highlighted above, make them a better candidate for various applications in the field of data transmission.

A key challenge associated with manufacturing hollow core fibers is accurately monitoring the internal microstructure of the hollow core fiber in a non-destructive manner.

The embodiments described below are not limited to implementations which solve any or all of the disadvantages of known methods of monitoring the internal microstructure of hollow core fiber.

### SUMMARY

The following presents a simplified summary of the disclosure in order to provide a basic understanding to the reader. This summary is not intended to identify key features or essential features of the claimed subject matter nor is it intended to be used to limit the scope of the claimed subject matter. Its sole purpose is to present a selection of concepts disclosed herein in a simplified form as a prelude to the more detailed description that is presented later.

A method of detecting a twist angle in a hollow core fiber is described. The method comprises receiving a micrograph of the hollow core fiber and determining a relative angle of twist of the hollow core fiber by comparing the micrograph to a model for the hollow core fiber. The model is generated from a sinogram of a reference hollow core fiber.

Many of the attendant features will be more readily appreciated as the same becomes better understood by reference to the following detailed description considered in connection with the accompanying drawings.

### DESCRIPTION OF THE DRAWINGS

The present description will be better understood from the following detailed description read in light of the accompanying drawings, wherein:
FIG. 1A shows a schematic of a side view of an antiresonant hollow core fiber, HCF;
FIG. 1B shows a schematic transverse cross-sectional view of an antiresonant hollow core fiber;
FIG. 1C shows a schematic transverse cross-sectional view of a nested nodeless antiresonant hollow core fiber, NANF;
FIG. 1D shows a schematic transverse cross-sectional view of a double nested nodeless antiresonant hollow core fiber, DNANF;
FIG. 1E shows a schematic transverse cross-sectional view of a triple nested nodeless antiresonant hollow core fiber, TNANF;
FIG. 2 shows a schematic diagram representing the generation of a sinogram from an antiresonant HCF;
FIG. 3 shows a flow diagram of a first example method of determining the amount of twist in a hollow core fiber;
FIG. 4 shows an example method of generating a model for use in the method of FIG. 3 from a sinogram;
FIGs. 5A-5D are graphical representations of the steps of the method of FIG. 4;
FIG. 6 shows a flow diagram of a first example method of determining an absolute angle of twist in a hollow core fiber;
FIG. 7 shows a second example method of performing the second phase of the method of FIG. 3;
FIG. 8 shows a confusion matrix;
FIG. 9 shows a flow diagram of a second example method of determining an absolute angle of twist in a hollow core fiber;
FIG. 10A shows a flow diagram of a second example method of determining the amount of twist in a hollow core fiber;
FIG. 10B shows a flow diagram of a third example method of determining the amount of twist in a hollow core fiber;
FIG. 10C shows a flow diagram of a fourth example method of determining the amount of twist in a hollow core fiber;
FIG. 11 shows a schematic diagram of a configuration for generation of a sinogram comprising a plurality of cameras and light sources;
FIG. 12 illustrates an exemplary computing-based device in which embodiments of the methods described herein are implemented; and
FIG. 13 shows a schematic diagram of an example draw tower incorporating a system for determining the amount of twist in a hollow core fiber using the methods described herein.
Like reference numerals are used to designate like parts in the accompanying drawings.

### DETAILED DESCRIPTION

The detailed description provided below in connection with the appended drawings is intended as a description of the present examples and is not intended to represent the only forms in which the present examples are constructed or utilized. The description sets forth the functions of the examples and the sequence of operations for constructing and operating the examples. However, the same or equivalent functions and sequences may be accomplished by different examples.

In hollow core optical fibers, light is guided through a longitudinal hollow central core, rather than in solid glass as is the case for solid core fibers. Typically, a hollow core fiber includes a central hole surrounded by a plurality of peripheral channels extending longitudinally along the fiber length. The term "longitudinally" in the context of optical fibers is defined as the length of the fiber or along the direction light propagates through the fiber. As will be explained later, the plurality of peripheral channels may be located in various geometry arrangements and have very high longitudinal consistency. Compared to solid core fibers, hollow core fibers provide potential benefits such as reduced loss from both glass absorption and scattering, increased propagation speed and reduced optical nonlinearities making hollow core optical fiber very attractive for use in applications such as telecommunications. However, manufacturing hollow core optical fiber in lengths that are practical for telecommunications (tens to hundreds of kilometers) is challenging owing to the complexities in controlling the microstructure within the hollow core fiber. This is particularly important if hollow core fibers are to be used to connect data centers located in geographically remote areas. A class of hollow core optical fibers which has been shown to have beneficial optical properties is antiresonant hollow core fiber (AR-HCR or ARF).

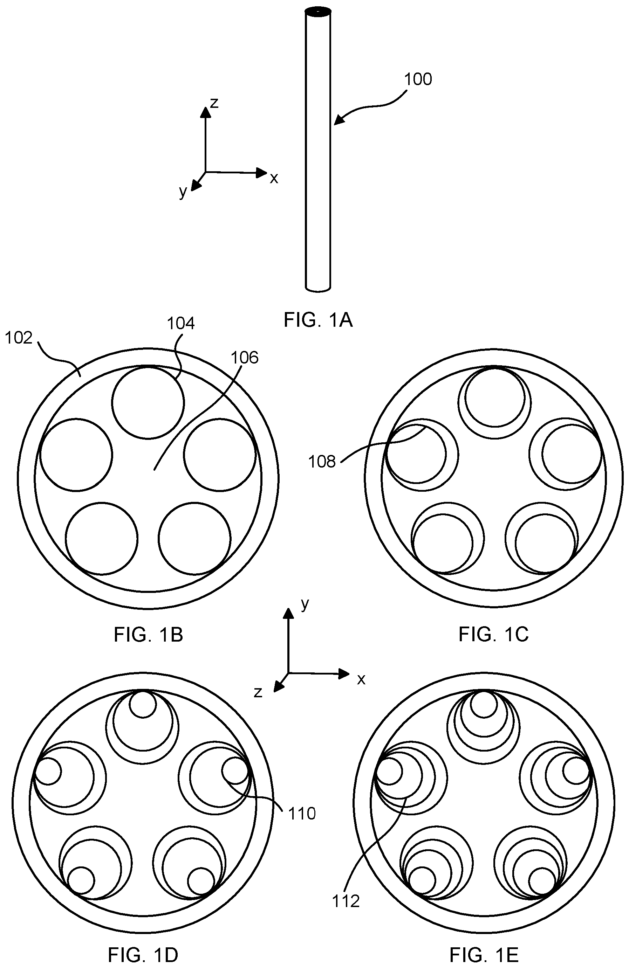

Antiresonant hollow core fibers are characterized by the design of their internal structure (i.e., the microstructure) within a glass tubular cladding. These fibers guide light at antiresonant wavelengths governed by the geometry of the microstructure. Guiding light in this way can offer a wider bandwidth compared to other hollow core fiber designed such as photonic bandgap fibers and also minimize the electric field at the air-glass interface which can help reduce the loss incurred from surface roughness scattering. FIGs. 1B-1E show examples of the internal structure of a collection of antiresonant hollow core designs. FIG. 1A shows a schematic diagram of the side view of a hollow core optical fiber 100.

FIG. 1B shows a schematic transverse cross-sectional view of an antiresonant hollow core fiber (HCF). The HCF optical fiber has an outer tubular cladding 102, a structured, inner, cladding comprising a plurality of tubular capillaries 104 extending longitudinally along the length of the fiber which are attached to the inner surface of the tubular cladding. The plurality of tubular capillaries 104 is arranged to form a ring around the inner surface of the tubular cladding and define a hollow core 106. The tubular capillaries define the plurality of voids surrounding the hollow core, and in some cases are spaced evenly around the inner surface of the outer cladding.

FIG. 1C shows a schematic transverse cross-sectional view of a nested antiresonant nodeless fiber (NANF) which falls into the category of antiresonant HCFs. It differs from the antiresonant HCF of FIG. 1B in that it includes first additional capillaries 108 nested within the tubular capillaries 104. The inclusion of nested capillaries has been shown to reduce loss within antiresonant hollow core fibers and also to improve the model purity. It achieves this by making the fiber single mode, suppressing the higher order modes which is a quality that is desirable for data transmission.

FIG. 1D shows a schematic transverse cross-sectional view of a double nested antiresonant nodeless fiber (DNANF) which falls into the category of antiresonant HCFs. It differs from the NANF of FIG. 1C in that it includes a second additional capillary 110 nested within the larger nested capillaries. The addition of further nested capillaries provides an additional reduction of optical losses within antiresonant hollow core fibers.

FIG. 1E shows a further extension of the DNANF which is the triple nested antiresonant nodeless fiber (TNANF) which falls into the category of antiresonant HCFs. The TNANF differs from the DNANF whereby a third additional capillary 112 included into the sets of nested capillaries. The inclusion of another nested capillary has also been shown to provide an additional reduction of optical losses within antiresonant hollow core fibers.

Optical loss in HCFs is primarily determined by the design, geometry and longitudinal uniformity of the microstructure (e.g., in DNANF, by the size and thickness of resonators, or nested capillaries, defining the hollow core). These properties define the transmission window (the range of wavelengths which are transmitted) and its depth (how low the transmission loss is at those wavelengths).

In conventional solid-core single-mode fibers, light is known to propagate in two Principle States of Polarisation (PSPs) including a slow axis and a fast axis, with power in a pulse being transferred between these two PSPs (an effect referred to as Polarization Mode Dispersion, PMD). Over long distances, the delay between these two axes causes broadening of the pulse and this can lead to transmission errors. By twisting the solid-core single-mode fiber during the fiber drawing process, the PSPs are caused to exchange power and this results in averaging of the propagation speed and hence a reduction in the PMD. A similar mechanism may occur in hollow core fibers; however, this is difficult to investigate without a non-destructive method of measuring the amount of twist in a hollow core fiber. Similarly, without such a non-destructive measurement method, it is difficult to fabricate a hollow core fiber with a pre-determined amount of twist.

Described herein is a non-destructive method for determining the amount of twist in a hollow core fiber e.g. in an antiresonant HCF. This method may be used to assess hollow core fiber either during fabrication (e.g. as part of a feedback loop during fiber draw in order to satisfy pre-defined twist specifications) or post-fabrication (e.g. as part of a quality control assessment). The methods described herein are also scalable in that they can be used in high-volume manufacture because they can be performed in a short period of time and at high repetition rates (e.g. 2500 frames per second, fps), so they are suitable for arrangements with high fiber drawing speeds. The methods described herein do not require any external marking of the fiber - existing techniques which use marking are not scalable and the marking reduces the quality of the fiber.

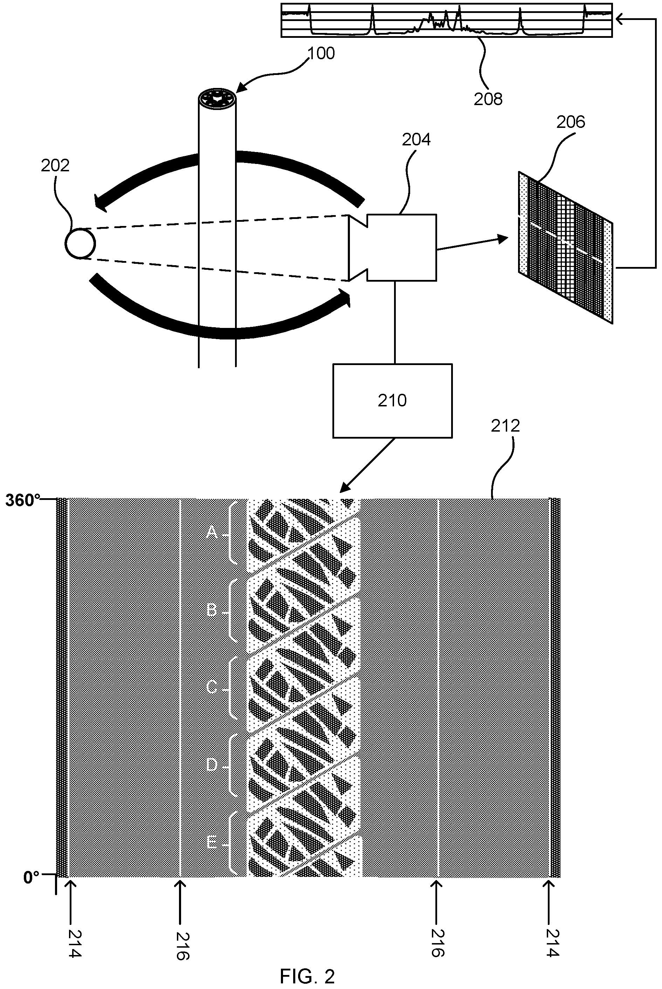

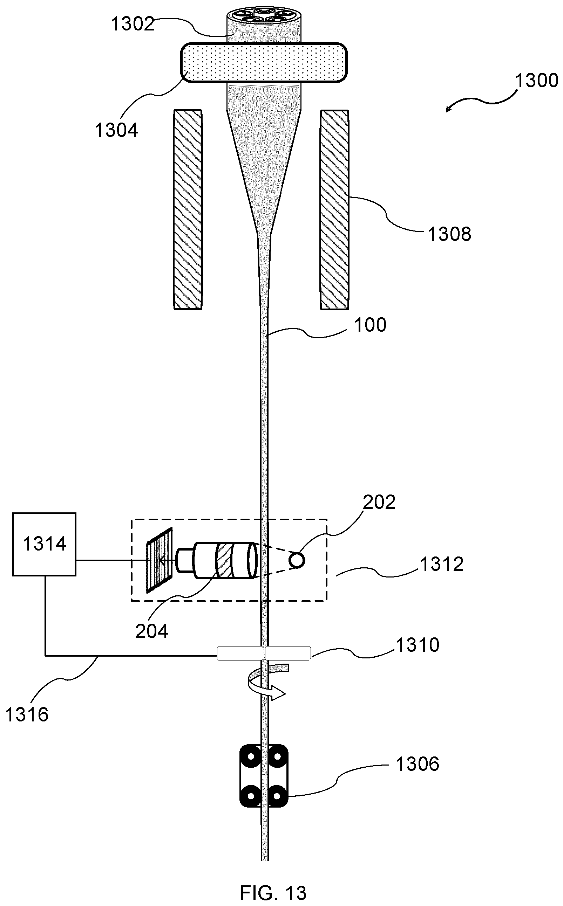

In examples where the measurement methods described herein are used as part of a feedback loop to fabricate a hollow core fiber with a pre-determined amount of twist (e.g. an amount of twist that meets pre-defined criteria which may, for example, specify one or more of a minimum twist angle, a maximum twist angle, a minimum rate of twist and a maximum rate of twist), the preform may be held stationary (e.g. above the furnace in the drawing tower) and a spinner (i.e. a mechanism for spinning the drawn fiber) may be positioned after (i.e. below) the furnace. Referring back to FIG. 2, this may show a portion of the fiber 100 after it has passed through the draw furnace and either before or after the spinner depending upon the particular arrangement used (as described below with reference to FIG. 13). The spinner may be arranged so that it can spin the fiber in both directions (i.e. both clockwise and anticlockwise) and during the drawing of a fiber it may first spin the fiber in one direction (e.g. clockwise) and then spin it in the other direction (e.g. anticlockwise). The angle of twist of the fiber that is determined using the methods described herein may be used in a feedback loop to control / adjust the operation of the spinner (e.g. a rate and/or direction of rotation of the spinner) in order to satisfy the pre-defined criteria for twist in the fiber. In addition, or instead, the angle of twist may trigger cessation of the drawing process if the angle of twist exceeds a pre-defined threshold.

The methods described herein use a sinogram which is a way of visualizing images captured using a camera at a range of angles (e.g. up to 360°) around a fiber. An example arrangement for generation of a sinogram is described with reference to FIG. 2. As shown in FIG. 2, a sinogram of an antiresonant HCF 100 is generated using a light source 202 and a camera 204 positioned on opposing sides of the antiresonant HCF 100. The camera 204 captures a side image of the antiresonant HCF 100 that has been illuminated by the light source 202. The transmitted light 204 which passes through the antiresonant HCF 100 and is collected by the camera creates a striped pattern 206. The detected striped pattern is also referred to as a micrograph. The stripes stem from shadows created by the structure of the antiresonant HCF as well as refraction and reflection of the light as it passes through the HCF. The characteristics of the striped pattern are therefore directly influenced by the geometry of the HCF including its internal microstructure (e.g. the arrangement of capillaries as shown in FIGs. 1B-1E).

An example micrograph 206 detected from a single position from the side of the HCF is also shown in FIG. 2. Specifically, the micrograph 206 is of a NANF (see FIG. 1C). The y-axis of the micrograph 206 is representative of the longitudinal displacement along the length of the HCF. The x-axis of the micrograph 206 is representative of the variations in light intensity, also referred to as an intensity profile, caused by the shadows and refraction as discussed previously. FIG. 2 also shows an intensity plot 208 taken from a single row of pixels from the micrograph 206. Whilst the micrograph 206 shown in FIG. 2 has a vertical resolution of more than one pixel, in various examples, the vertical resolution captured by the camera 204 may only be a single pixel high. Where the micrograph 206 captured by the camera 204 has a vertical resolution of more than one pixel, a micrograph which is only a single pixel high may be generated by averaging a pre-defined number of rows (i.e. for the i^{th} pixel in a row, averaging the pixel values of the i^{th} pixel in each of the pre-defined number of rows). Averaging in this way increases the signal-to-noise ratio but does require additional computation so the number of rows of pixels that are averaged may be small (e.g. 4 rows).

Given the complexity of the internal structure of antiresonant HCFs, such as DNANFS, the necessary information to fully characterize the geometry of the internal structure cannot be obtained from a single micrograph and so the sinogram is generated by collecting micrographs at a plurality of angles around the circumference of the HCF, e.g. by rotating the light source 202 and camera 204 around the longitudinal axis of the HCF 100 (where this longitudinal axis passes through the center of the core of the HCF), as indicated by the arrows in FIG. 2. In the example shown, the light source 202 and camera 204 are rotated in an anticlockwise direction around the HCF 100. There are a number of other ways multiple micrographs can be detected from a plurality of angles, instead of rotating the light source and camera, including rotating the fiber in front of the camera and/or using a plurality of light source-camera pairs arranged in a circle around the HCF. It should be appreciated that positioning the light source and the camera at a plurality of angles around the circumference of the HCF includes any of these configurations.

At each angle of the plurality of angles around the HCF, the camera 204 detects a micrograph 206 including an intensity profile for a single longitudinal position along the HCF 100. The intensity profiles are communicated to a microstructure measuring system 210 which converts the plurality of intensity profiles into a sinogram 212 (e.g. by stacking the individual micrographs corresponding to different angles). Each increment along the y-axis of the sinogram 212 represents the different angles from which micrographs are detected around the circumference of the antiresonant HCF. Hence why the y-axis ranges from 0° to 360° in the sinogram 212. The increments along the y-axis of the sinogram are dictated by how many positions of the light source and camera are used. The example sinogram presented in FIG. 2 is of a NANF where the angular resolution (increments along the y-axis) is 4°. The sinogram may be captured by rotating the light source - camera pair around the HCF and capturing images at 90 equally spaced positions. In another example configuration, an arrangement of multiple light source - camera pairs arranged around the HCF may be used, e.g. 28 light source - camera pairs which provides an angular resolution of 12.86°. By rotating this arrangement of 28 light source - camera pairs, the angular resolution can be reduced without requiring the arrangement to be rotated through the full 360°. The x-axis of the sinogram 212 represents the intensity profile from the micrographs across the width of the HCF.

The sinogram 212 exhibits numerous consistent characteristics for antiresonant HCFs (including NANFs, DNANFs and TNANFs) that reflect the structure of the fiber and in particular the internal microstructure of the HCF. The sinogram 212 includes a first pair of vertical stripes 214 exhibiting bright or high intensity positioned towards the outside of the sinogram (e.g. at extreme low and high values on the x-axis). The sinogram 212 also includes a second pair of vertical stripes 216 positioned inside the first pair of vertical stripes 214. The second pair of vertical stripes 216 also exhibit higher intensity compared to the rest of the sinogram. The central portion of the sinogram 212 shows a vertically repeating pattern. Since the sinogram 212 has been constructed from a NANF comprising five tubular capillaries arranged in a ring around the inner surface of the outer tubular cladding, the vertically repeating pattern comprises five repetitions. For example, the diagonal elements of the pattern in the central portion of the sinogram 212 repeats five times, as indicated by the brackets labelled A-E in FIG. 2. The features of the sinogram 212 represent characteristic microstructural features of antiresonant HCFs and can therefore be used to monitor the microstructure of HCFs during manufacture, including monitoring the amount of twist, as is described in detail below.

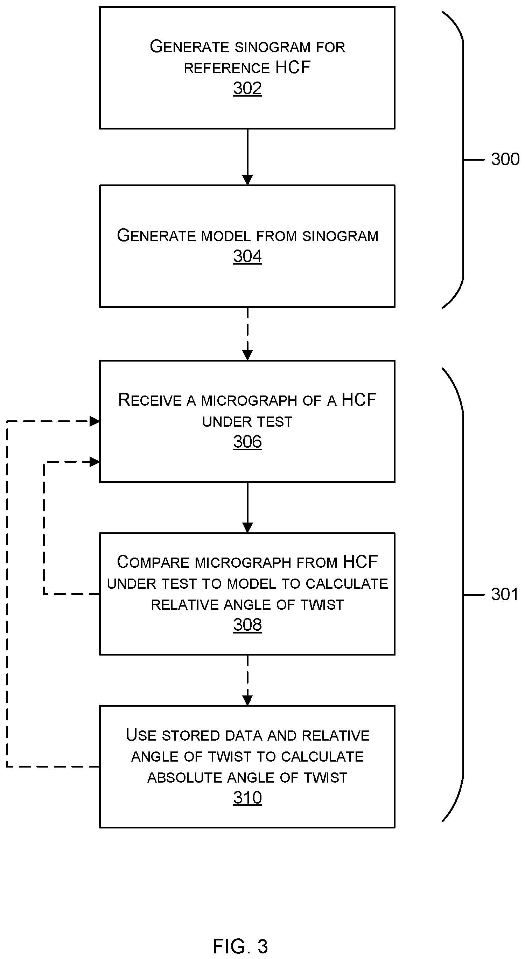

FIG. 3 shows a flow diagram of an example method of determining the amount of twist in a hollow core fiber. The method comprises a first phase 300 in which a model is created and then a second phase 301 which uses the model to calculate the angle of twist of a fiber under test (FUT), where this fiber is a HCF. The model need only be created once for a particular design of HCF (e.g. for a particular microstructure design) and can then be used to determine the amount of twist in any HCF of the same or similar design. In this context a 'similar design' may mean a design with the same rotational symmetry and similar microstructure, e.g. where at least the outer capillaries 104 are the same or where the two largest capillaries 104, 108 are the same, but where there may be differences in the smaller capillaries 110, 112. This means that, for example, a model created using the fiber shown in FIG. 1C may be used for any of the fibers shown in FIGs. 1C-1E. Referring back to FIGs. 1B-1E, a different model may be created for each of the four designs shown. Consequently, it is this second phase 301 of the method that may performed during fabrication of an HCF (e.g. as part of a feedback loop during fiber draw in order to satisfy pre-defined twist specifications) or post-fabrication (e.g. as part of a quality control assessment).

As shown in FIG. 3, the first phase 300 comprises generating a sinogram using a reference HCF of a particular design (block 302) and then using that sinogram to generate a model (block 304). There are a number of different steps that can be used to generate the model (in block 304) as described below; however, at its simplest, the model comprises a portion of the sinogram that covers a range of angles given by 360/R degrees, where R is the degree of rotational symmetry of the HCF design. Referring back to the example sinogram 212 shown in FIG. 2, this relates to HCF with R=5 and so the corresponding model would cover 72°. This may, for example, be created by cropping the sinogram to cover the defined range of angles only. In addition, the cropped sinogram may be normalized - this involves converting the pixel intensities so that the sum of squares of the pixel intensity values within each row of the sinogram equals one.

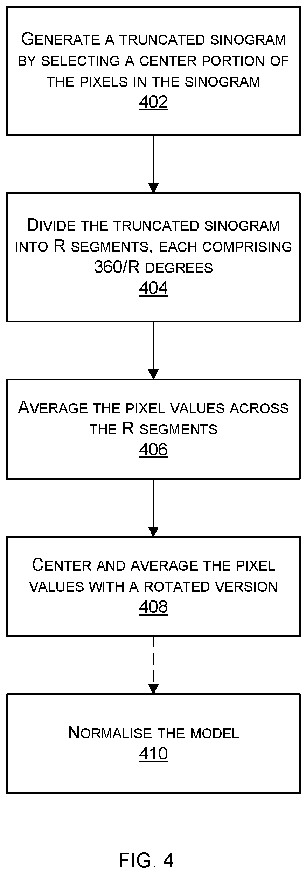

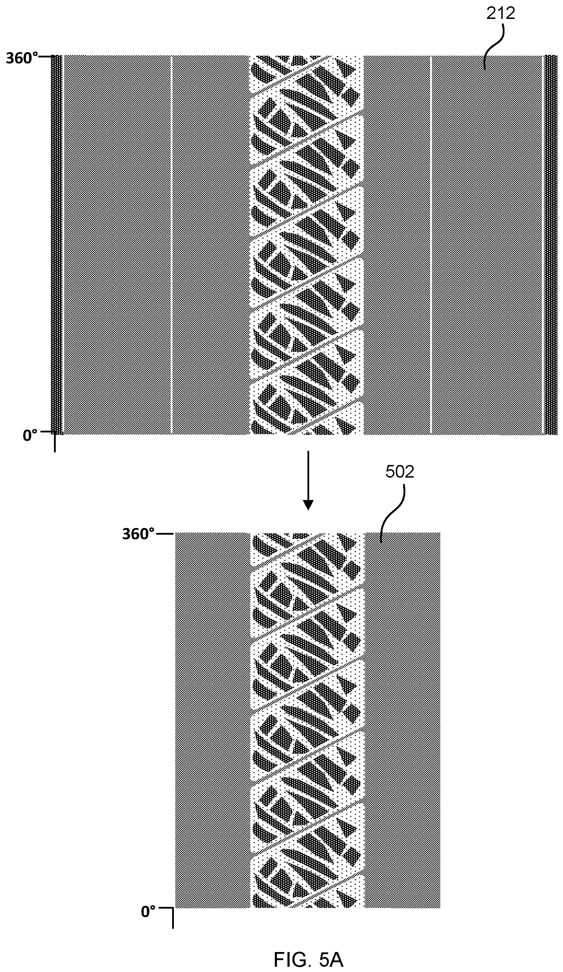

FIG. 4 shows a second example method of generating a model from a sinogram (in block 304). This method shows five steps (blocks 402-410); however, in further examples any combination of one or more of these steps may be used and/or the steps used may be performed in a different order to that shown in FIG. 4. For example, block 410 is optional, or block 402 and/or block 408 may only be used, or blocks 404 and 406 may only be used, or either block 402 or 408 may be omitted. In some examples, block 402 may be performed at the end of the method of FIG. 4, or prior to block 410, instead of at the beginning. The individual steps shown in FIG. 4 can be described with reference to FIGs. 5A-D.

As shown in FIG. 5A, a truncated sinogram 502 may be generated (in block 402) by selecting a center portion of the pixels in the sinogram 212. The center portion, and hence the truncated sinogram 502, comprises the part of the sinogram (in terms of pixel range) that includes the intensity variations caused by the microstructure of the HCF but may exclude the outer portions including the pairs of vertical stripes 214, 216 which may be caused by the outer cladding of the fiber, rather than the microstructure. In an example, the truncated sinogram 502 may comprise a width of around a fifth or less of the full sinogram 212. For example, the truncated sinogram 502 may have a width of around 120-150 pixels whereas the full sinogram 212 comprises a width of around 800 pixels. When performing the truncation, the truncated sinogram 502 may be centered around the midpoint between pairs of vertical stripes 214, 216 (e.g. around the midpoint of the inner pair of vertical stripes 216).

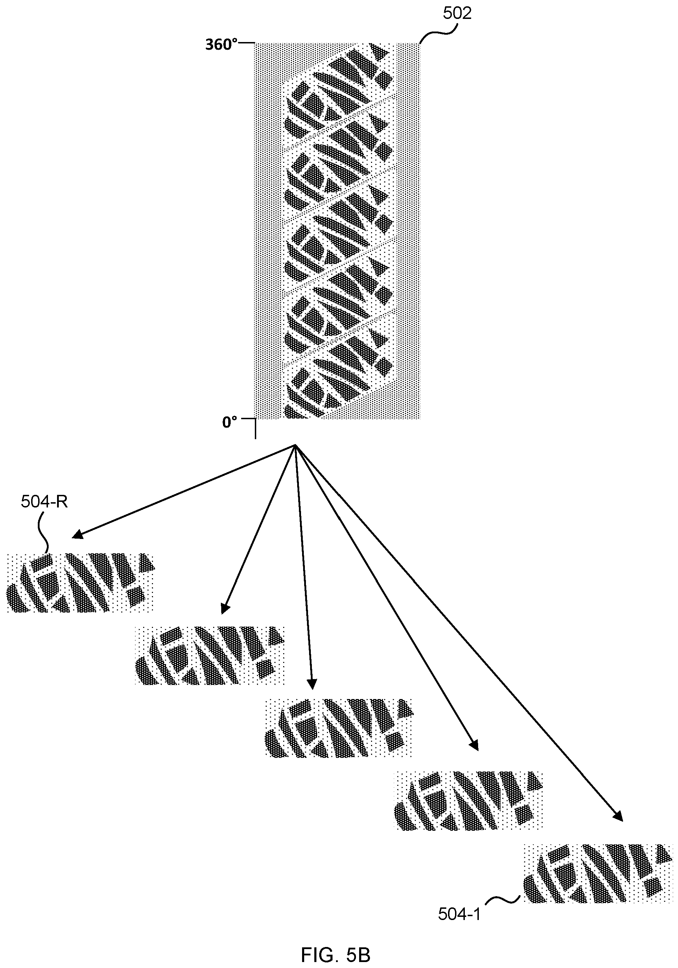

As shown in FIG. 5B, the truncated sinogram 502 (or the full sinogram 212, if block 402 is omitted) is divided (in block 404) into R segments, 504-1 to 504-R, where, as described above R is the degree of rotational symmetry of the HCF design. In the example shown in FIG. 5B, R=5. Each of the segments comprises a separate, non-overlapping part of the truncated sinogram, each one extending over 360/R degrees. In the example shown, the first segment, 504-1, extends from 0-71°, the second segment, extends from 72-143°, the third segment, extends from 144-215°, the fourth segment, extends from 216-287°, and the final segment, 504-R, extends from 288-359°.

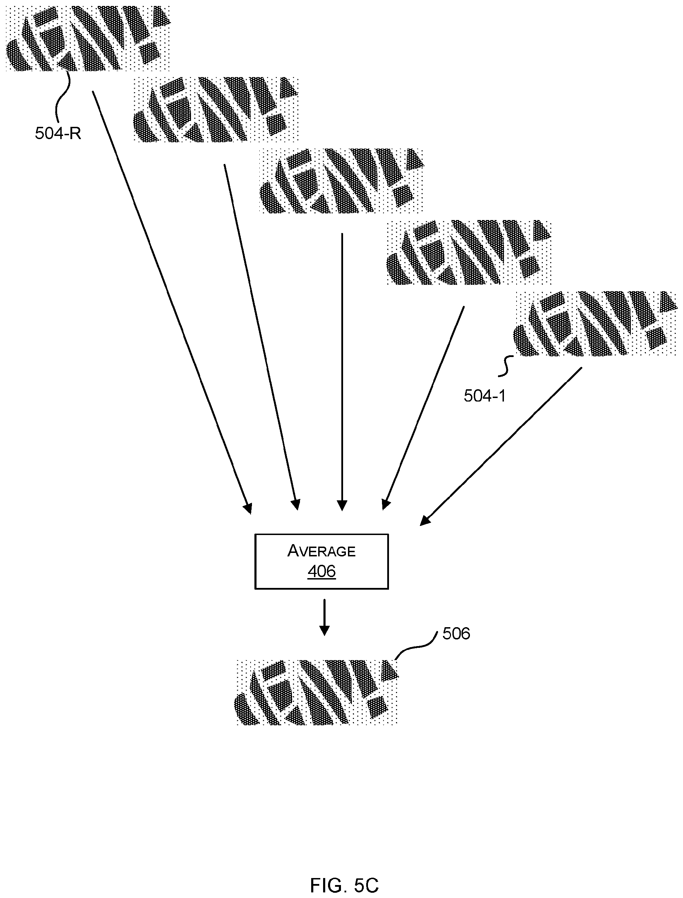

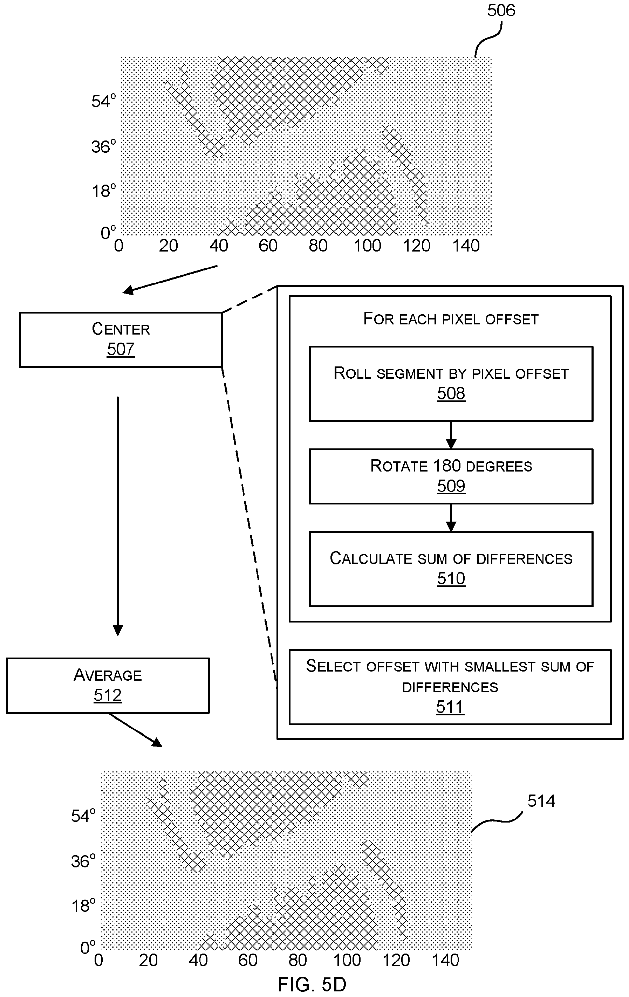

Having generated the R segments, the pixel values for these R segments are then averaged (in block 406) to create a single averaged segment 506 that extends over 360/R degrees, as shown in FIG. 5C. This average involves summing corresponding pixels from each of the R segments and dividing by R. The resultant averaged segment 506 which extends over 360/R degrees is then further averaged with a rotated version of itself (in block 408). As shown in FIG. 5D, the averaged segment 506 is first centered (block 507) - this is because segments are only rotationally symmetric if they are centered (in the angular, i.e. vertical, direction) on either the tubular capillaries or the gap between the capillaries. The centered averaged segment and the rotated centered averaged segment are then averaged (block 512) to generate the model 514.

To center the segment (in block 507) the averaged segment 506 is rolled vertically by removing rows of pixels from the top of the sinogram and adding them to the bottom or vice versa (block 508). The term 'pixel offset' is used herein to refer to the number of rows that have been moved between the top and bottom of the segment. For each pixel offset (where the pixel offset can have a value between 0 and the number of rows in the segment), the offset averaged segment is rotated by 180° to form a rotated offset averaged segment (block 509). A sum of differences is then calculated for the offset averaged segment and the rotated offset averaged segment (block 510). Once this has been performed for all possible offsets, the offset with the smallest sum of differences is selected (block 511). The pair of segments with the selected offset, i.e. the offset averaged segment with the selected offset and the rotated offset average segment with the selected offset, are the centered averaged segment and the rotated centered averaged segment which are then averaged (in block 512) to generate the model.

It will be appreciated that the centering (in blocks 408 and 507) may, in some cases, result in applying a zero offset. The centering, rotating and averaging (in block 408) may, for example, result in averaging pixel 140 at angle 71° (the bottom left pixel in the rotated offset averaged segment) with pixel 0 at angle 0° (the bottom left pixel in the offset averaged segment), in the case that the alignment does not result in any offset. Furthermore, whilst the description of the centering process (in block 507) is described above as being performed for each possible offset (i.e. from zero to the number of rows in the segment), it will be appreciated that in other examples, this may be performed for only a subset of the offsets to reduce the overall amount of computation required.

The model 514 that is generated as described above, may be used in that form, or it may then be normalized (in block 410) to generate a normalized version of the model. As described above, normalizing the model comprises converting the pixel intensities so that the sum of squares of the pixel intensity values within each row of the model equals one. Normalizing the model (in block 410) can reduce the computational effort that is required to perform the second phase 301.

As shown in FIG. 3, the second phase 301 comprises receiving a micrograph of a HCF under test (block 306) and comparing this to the model (as generated in the first phase 300) to determine a relative angle of twist (block 308). The output from the method may be this relative angle of twist or there may be an additional step of determining an absolute angle of twist using the relative angle of twist and stored data (block 310). The model that is used in the comparison (in block 308) may be the original model or a normalized version of the model (e.g. as generated in block 410). The steps of the second phase 301 may be repeated for successive micrographs (e.g. for successive frames).

As described above, the micrograph for a HCF under test (as received in block 306) may be captured by a camera 204 (e.g. using the arrangement shown in FIG. 2) and comprise a single row of pixel intensity values. This single row of pixel intensity values may correspond to a single row of captured pixel intensity values or an average across a plurality of captured rows (e.g. 4 rows) as described above. This micrograph is received (in block 306) and compared to the model (the original model or the normalized version) to identify a row in the model that most closely matches the received micrograph (in block 308). The determination of the closest matching row (in block 308) may comprise determining the row with the smallest Euclidean distance from the pixel values of the received micrograph. Each row in the model corresponds to an angle of twist (which may also be referred to as a twist angle) modulo 360/R. So, for the example shown in FIGs. 5A-D, where R=5, each row in the model corresponds to an angle of twist modulo 72. Depending upon the resolution of the original sinogram from which the model is created, there may be a different amount of quantization of the determined angle of twist (e.g. steps of 4° where the original sinogram 212 comprises 90 rows of pixels) or interpolation may be used so that each row corresponds to 1° (or another predefined angle) irrespective of the resolution of the original sinogram. Where interpolation is used, the original sinogram or the resultant model may be interpolated. Having determined the closest matching row, the relative angle of twist is the angle which corresponds to the closest matching row.

The determination of the closest match may be determined using the standard definition of Euclidean (L2) distance, i.e. by calculating, for each row in the model, the square root of the sum of squares of the differences between the pixel values in the micrograph and the particular row, and then selecting the row with the smallest calculated value. Where the model is truncated (e.g. in block 402) such that each row comprises fewer pixels than the micrograph, the micrograph may be similarly truncated before performing the comparison.

Where the model is normalized, the determination of the smallest Euclidian distance, and hence closest matching row, (in block 308) may be further optimized using the "fast L2" optimization. This involves, instead of finding the smallest square root of the sum of squares of the differences, finding the row in the model with the largest value of a dot product with the sinograph. This means that instead of calculating the following and finding the smallest value: $\sqrt{{\left(p1-m1\right)}^{2} + {\left(p2-m2\right)}^{2} + ⋯}$ The method comprises calculating the following and finding the largest value: $\left(p1\times m1\right) + \left(p2\times m2\right) …$ Where p1, p2... are the pixel values in the micrograph and m1, m2,... are the pixel values in a row of the model. This calculation of the largest dot product results in identification of the same closest matching row but in a much more computationally efficient manner. It will be appreciated that alternative methods of determining the closest matching row in the model to the received sinograph may also be used (e.g. using a trained neural network).

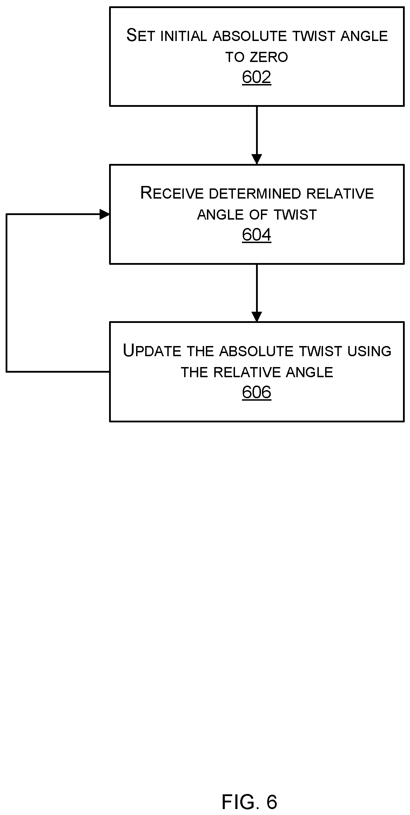

As described above, using the comparison to find a matching row, determines a relative angle of twist of the HCF under test (i.e. a twist angle modulo 360/R) and this may be output from the method and the method may terminate at this point. However, in some implementations, it may be useful or necessary to know the absolute angle of twist rather than relative angle of twist. The absolute angle of twist may be calculated using the relative angle of twist (as calculated in block 308) and stored data (in block 310). An example method of calculating the absolute of angle of twist (in block 310) is shown in FIG. 6.

Initially, an absolute angle of twist is set to zero (block 602) and this value is stored. Having calculated a relative angle of twist (in block 308), this is received (block 604) and used to update the absolute angle of twist (block 606). In particular, the absolute angle of twist is updated to be the nearest absolute angle of twist (i.e. the nearest to the stored absolute angle of twist prior to updating) that is also the correct angle of twist modulo 360/R. This is then repeated for each subsequent received relative angle of twist, e.g. for every frame captured by the camera 204.

For example, for R=5 and if the current, stored, absolute angle of twist is 142° and a new relative angle of twist is received of 2° modulo 72, then the absolute angle of twist is determined to be 146°, as opposed to 74°. Both 146° and 74° (as well as 2°, 218° and 290°) are equal to 2° modulo 72; however, 146° is the closest of the possible angles of twist to the stored absolute value.

In the methods described above, there is a risk of what may be referred to as 'aliasing' (i.e. determination of the wrong absolute angle of twist). One possible source of this aliasing is if the fiber has rotated by more than 360/2R in a single frame and a second source of aliasing is noise in the output model which means that there are some sets of angles that are difficult to distinguish. Example methods of reducing this risk are described below.

Using the method of FIG. 6, if the fiber has rotated by more than 360/2R in a single frame then the calculated absolute angle of twist will be incorrect. However, based on experimental results to determine a maximum rate of twist, it has been determined that as long as the frame rate at which successive micrographs are captured is high enough, the maximum change in angle per frame is significantly lower than 360/2R. For example, if micrographs are captured at a frame rate of 2500 fps, the maximum expected change in angle per frame is ~0.25° which is significantly less than 360/2R. Given an experimentally determined maximum rate of twist of A°/s, this sets a lower limit on the frame rate, F, (in fps) that should be used to avoid aliasing: $\frac{A}{F} < \frac{360}{2 R}$ $F > \frac{A \times R}{180}$

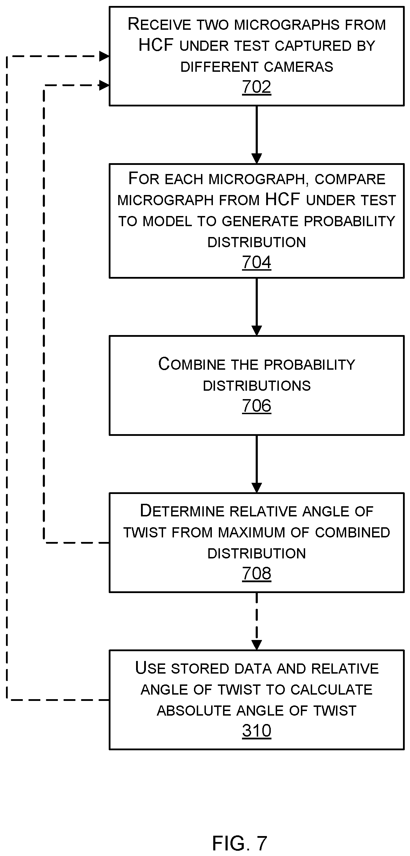

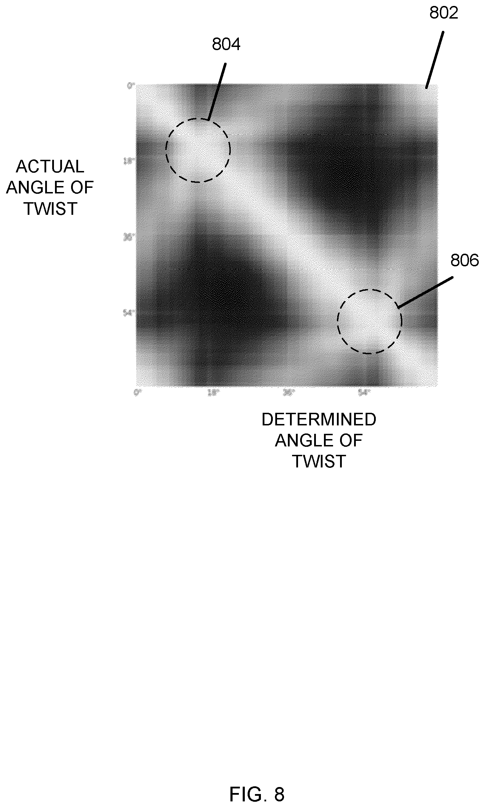

FIG. 7 shows a second example method of performing the second phase 301 of the overall method. This method may be used to further improve / refine the accuracy of the determined angle of twist (whether relative or absolute), particularly for those HCF designs that have ranges of angles of twist that are hard to distinguish. These ranges of angles which are hard to distinguish are dependent on the particular microstructure of the HCF and an example can be described with reference to FIG. 8. FIG. 8 shows what may be referred to as a confusion matrix 802 for an example HCF design. It shows, in the form of a heatmap, how likely one twist angle is to be confused for another, with the lighter areas indicating angles which are identified as similar and the darker areas indicating angles which are identified as distinct, when using the methods described above. The y-axis of FIG. 8 is the actual angle of twist of the HCF and the x-axis is the angle of twist as determined using the method described above. The chance of confusion would be small if the confusion matrix had a light stripe on the diagonal from the top left corner to the bottom right corner with the rest of the heatmap being darker in colour. In this example, however, there are some larger areas 804, 806 where it is harder to distinguish angles, i.e. around angles 10-28° and around 44-62°. These may be referred to as uncertainty regions.

In the second example method, as shown in FIG. 7, instead of using a single micrograph to determine the angle of twist (whether relative or absolute), two micrographs are used. These two micrographs are captured by cameras which are positioned at different angular positions around the HCF and are separated by an angle which is not a multiple of 360/R. The two micrographs are received (block 702) and each micrograph is compared to the model (e.g. the same model as described above, either in original or normalized form, generated using the first phase 300) to generate a probability distribution over the angles modulo 360/R (block 704). The probability distribution may be generated from the square root of the sum of the squares of differences or from the dot product. The probability distributions generated from each of the micrographs are then combined (block 706) and the relative angle of twist is determined from the maximum of the combined probability distribution (block 708). As with the previously described method, the output may be this relative angle of twist or there may be an additional step of determining an absolute angle of twist using the relative angle of twist and stored data (block 310). As with the previous method, the method is repeated for subsequent micrographs (i.e. for subsequent frames).

By using the method of FIG. 7, the uncertainty regions (e.g. areas 804, 806 in FIG. 8) for the different cameras do not overlap and so the overall uncertainty is reduced and the accuracy of the determined angle of twist is improved.

Whilst FIG. 7 describes the use of two micrographs, in other examples, more than two micrographs are used where again the plurality of cameras are all separated by angles which are not a multiple of 360/R. This further reduces overall uncertainty; however, using more cameras increases the complexity of the apparatus.

The multiple cameras used to capture the micrographs that are then used in the method of FIG. 7 ideally capture frames at exactly the same time and image the same point on the fiber. If, however, there is any offset in capture time or imaging position, then the method may be modified to accommodate this. For example, offset in time can be accommodated by aligning timestamps on captured frames before processing. An offset in lateral position (i.e. perpendicular to the long axis of the fiber which is horizontally in the arrangement of FIG. 2) may be addressed by finding the midpoint between the vertical stripes in the micrograph, as described above) An offset in longitudinal position along the fiber (i.e. along the long axis of the fiber, which corresponds to a vertical offset in the arrangement of FIG. 2) is more complex to address and where the methods described herein are used to measure the twist in fiber as it is being drawn, requires correcting for both a time-lag between frames (because the fiber is moving down as it is drawn) and a multiplicative factor (because one end of the fiber is held stationary and the other is twisted by the spinner).

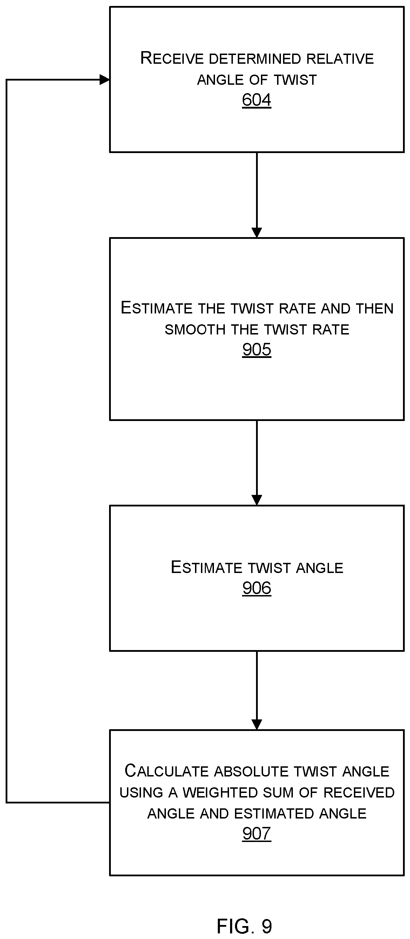

FIG. 9 shows a second example method of calculating the absolute angle of twist (in block 310) which uses a probabilistic model for the rotation / twist of the fiber over time. As described above, the fiber is not expected to twist by more than A°/s, which means that for a particular frame rate of F fps, the expected twist between two adjacent frames can be calculated and by setting F at an appropriate value, the twist between two adjacent frames can be kept under a pre-defined threshold, e.g. of 1° or less. In addition, due to the angular momentum of the fiber, the rate of twist is not expected to change significantly between frames. In the method of FIG. 9, the received angle of twist is used estimate a twist rate (e.g. by differentiating the twist angle) and then smoothing the twist rate as it is not expected to change very quickly due to rotational inertia (block 905). The estimated and smoothed twist rate along with a previously determined absolute twist angle (e.g. from a previous iteration of the method of FIG. 9) are then used to estimate an absolute twist angle (block 906). The absolute angle of twist is then determined (block 907) by calculating a weighted sum of the received relative angle (from block 604) and the estimated absolute twist angle (from block 906).

Whilst the optimizations shown in FIGs. 7 and 9 are described separately, it will be appreciated that in some examples they may be used together.

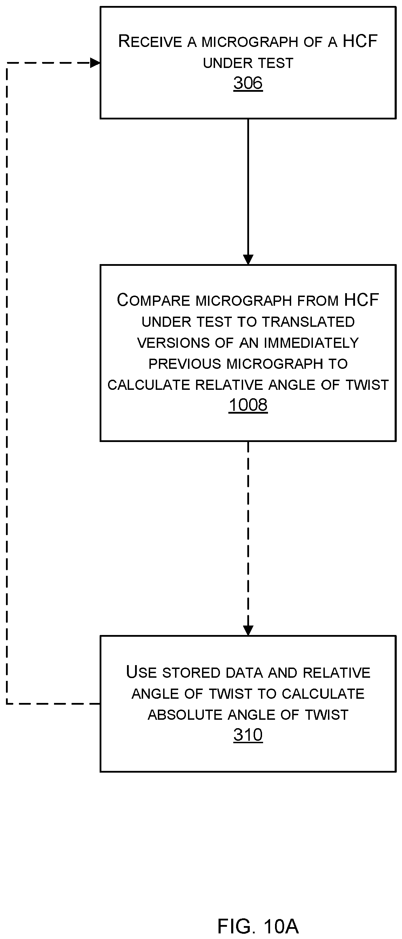

FIG. 10A shows a flow diagram of another example method of determining the amount of twist in a hollow core fiber which uses optical flow instead of a model-based approach. This method computes optical flow from the received micrographs for successive frames and the optical flow may be used to compare to the model and calculate the relative angle of twist. Optical flow identifies the pattern of motion between two adjacent frames (and hence two adjacent micrographs). As shown in FIG. 10A the method comprises comparing a micrograph of a HCF under test (received in block 306) with the previously received micrograph translated laterally by a plurality of different pixel offsets (e.g. pixels offsets of -x to +x, where for example, x=5) and to identify which one is closest to the newly received micrograph (block 1008). The closest one may be determined by calculating the mean square error (MSE) for each translated micrograph and the translated micrograph with the least MSE may be considered the best match. The relative angle of twist may be set to an angular value corresponding to the pixel offset of the best match translated micrograph (where the mapping between pixel offset of angle is dependent upon the particular arrangement for capturing micrographs). If the best match is shared between two translated micrographs, and hence between two pixel values (e.g. -2 pixels and -1 pixels), interpolation between the two translated micrographs may be used to more precisely determine a pixel offset (e.g. -1.7 pixels) and hence more precisely determine the relative angle of twist. Having determined the relative angle of twist (in block 1008), an absolute angle of twist may be calculated using the methods described above (block 310).

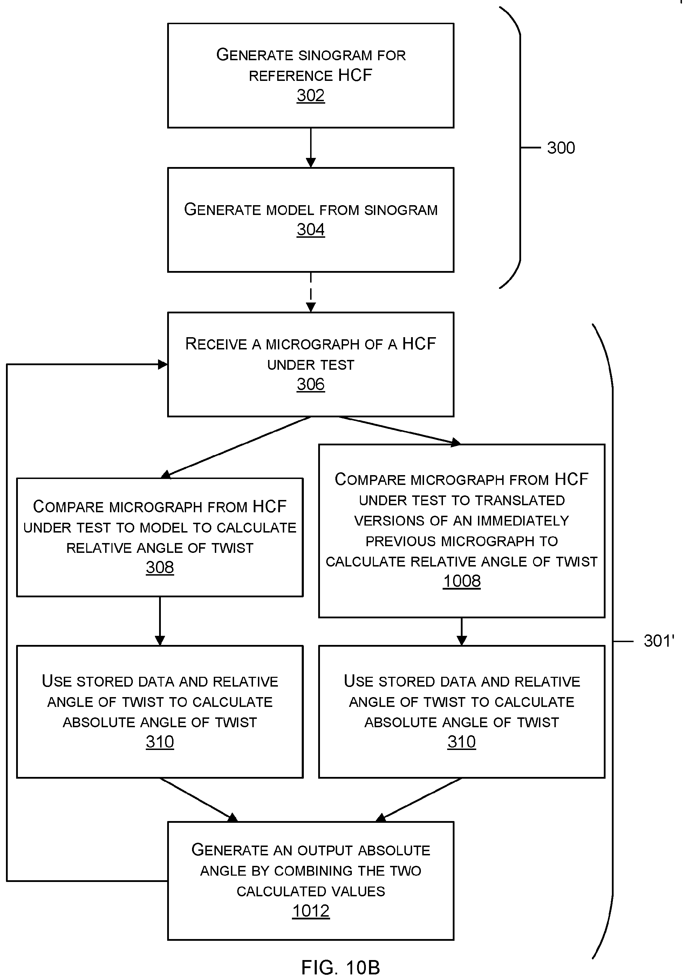

Use of optical flow may result in a less noisy signal but it is more prone to drift (e.g. if the fiber twists by a large angle, such as 360° and then twists back, the resultant twist that is determined using optical flow may not be zero, but may be offset from this, such as +10°). Consequently, a combination of the optical flow method of FIG. 10A and the model-based methods described above may be used as shown in FIG. 10B. Use of such a combination may result in more accurate determination of the angle of twist compared to using just the micrographs.

FIG. 10B shows a flow diagram of a further example method of determining the amount of twist in a hollow core fiber and which is a combination of the methods described above with reference to FIGs. 3 and 10A. As shown, a model is generated in a first phase 300 as described above but in the second phase 301' of the method, the received micrograph (from block 306) is used to calculate two different relative angles of twist: one using the model-based approach (in block 308) and the other using optical flow (in block 1008). From these two relative angles of twist, two absolute angles of twist are calculated (in blocks 310, as described above) and then these two absolute angles of twist are combined using a sensor fusion approach (e.g. using an Extended Kalman Filter) to provide an output absolute angle of twist (block 1012).

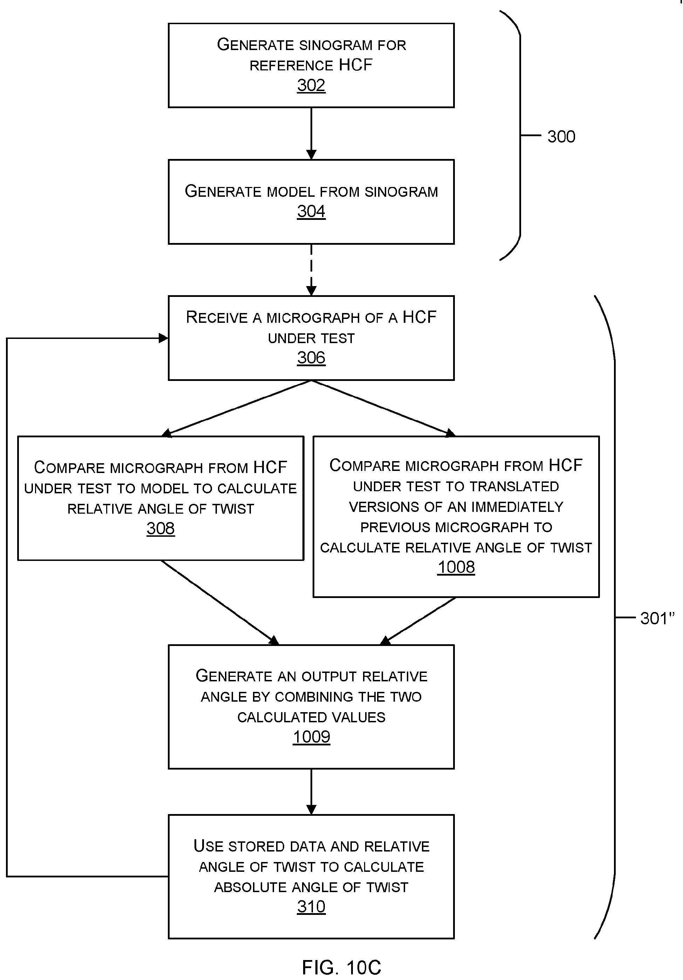

FIG. 10C shows a variation on the method of FIG. 10B in which, instead of determining two absolute angles of twist (in block 1012), instead, in a further modified version of the second phase 301", the two relative angles of twist (from blocks 803 and 1008) are combined using a sensor fusion approach (e.g. using an Extended Kalman Filter) to provide an output relative angle of twist (block 1009). An absolute angle of twist is then calculated using the output relative angle of twist (in block 310, as described above).

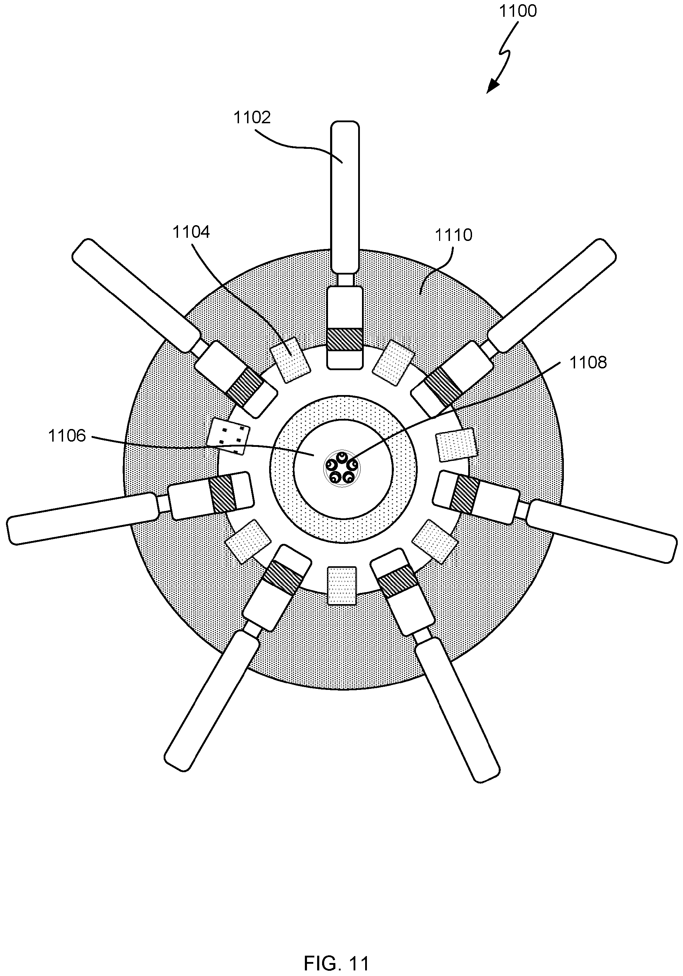

As discussed previously, micrographs detected from a plurality of angles around the circumference of an antiresonant HCF can be obtained using numerous configurations of one of or a plurality of cameras and light sources to enable generation of a sinogram. As shown in FIG. 2 and described above, a single light source - camera pair may be rotated around the HCF. FIG. 11 shows a schematic diagram of a top view of an alternative configuration 1100 of cameras and light sources for generating a plurality of micrographs from a plurality of angles around the circumference of an antiresonant HCF. As described above, such an arrangement may be used to generate the sinogram that is used in the generation of the model in the first phase 300 of the method of FIG. 3. The configuration comprises a plurality of cameras 1102 with corresponding light sources 1104 arranged on opposing sides of an opening 1106 for the HCF 1108. In some examples, the cameras 1102 and light sources 1104 may be supported on a mount 1110. In this configuration there are seven pairs of cameras and light sources however any number of pairs is possible and in some configurations a combination of multiple light source - camera pairs and twist around the HCF may be used (e.g. by rotating the arrangement of FIG. 11 around the HCF so as to generate more than 10 micrographs.

Whilst the examples shown above all have 5-fold rotational symmetry, this is by way of example only and the methods described herein are applicable to other values of R.

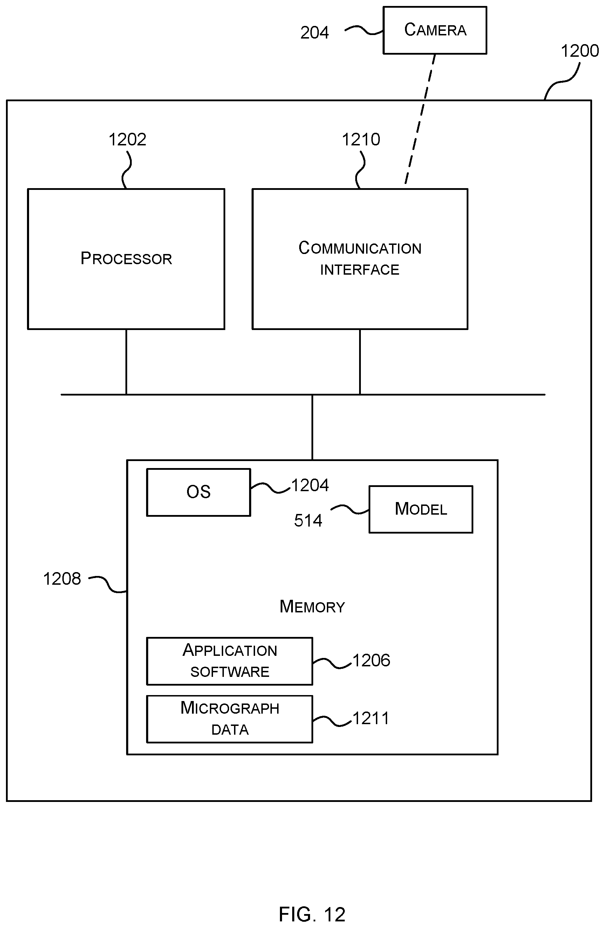

FIG. 12 illustrates various components of an exemplary computing-based device 1200 which are implemented as any form of a computing and/or electronic device, and in which embodiments of the methods described above are implemented in some examples. In some examples, the computing-based device 1200 is a general-purpose computer that is activated or reconfigured by a computer program stored in the computer. In other examples the computing-based device is specially constructed for the intended purpose. The computing-based device 1200 may correspond to the microstructure measuring system 210 shown in FIG. 2 and described above.

Computing-based device 1200 comprises one or more processors 1202 which are microprocessors, controllers or any other suitable type of processors for processing computer executable instructions to control the operation of the device in order to perform aspects of the method of twist detection as described herein. The processors 1200 may include at least one general-purpose processing device such as a central processing unit, microprocessor, complex instruction set computing (CISC) microprocessor, reduced instruction set computing (RISC) microprocessor, or other general-purpose processing device. In some examples, for example where a system on a chip architecture is used, the processors 1200 include one or more special-purpose processing device such as a fixed function block (also referred to as an accelerator) which implements a part of the method of twist detection in hardware (rather than software or firmware). The special-purpose processing device may be configured to execute instructions for performing the operations and methods described herein. Platform software comprising an operating system 1204 or any other suitable platform software is provided at the computing-based device to enable application software 1206 to be executed on the device.

The computer executable instructions are provided using any computer-readable media that is accessible by computing based device 1200. Computer-readable media includes, for example, computer storage media such as memory 1208 and communications media. Computer storage media, such as memory 1208, includes volatile and non-volatile, removable and non-removable media implemented in any method or technology for storage of information such as computer readable instructions, data structures, program modules or the like. Computer storage media includes, but is not limited to, random access memory (RAM), read only memory (ROM), erasable programmable read only memory (EPROM), electronic erasable programmable read only memory (EEPROM), flash memory or other memory technology, compact disc read only memory (CD-ROM), digital versatile disks (DVD) or other optical storage, magnetic cassettes, magnetic tape, magnetic disk storage or other magnetic storage devices, or any other non-transmission medium that is used to store information for access by a computing device. In contrast, communication media embody computer readable instructions, data structures, program modules, or the like in a modulated data signal, such as a carrier wave, or other transport mechanism. As defined herein, computer storage media does not include communication media. Therefore, a computer storage medium should not be interpreted to be a propagating signal per se. Although the computer storage media (memory 1208) is shown within the computing-based device 1200 it will be appreciated that the storage is, in some examples, distributed or located remotely and accessed via a network or other communication link (e.g. using communication interface 1210).

The memory 1208 may be used to store the model 514 (in original or normalized version) that is used in the methods described herein. The memory 1208 may also store micrograph data 1211 as it is being processed and/or other data (e.g. the absolute angle of twist) that is used in the method of FIGs. 3, 6, 7, 9 and 10A-C.

The communication interface 1210 may be configured to receive the micrographs of the HCF under test from the camera 204, 1102 that captures them. In the example shown in FIG. 12, the computing-based device 1200 is a server that receives and exposes its data over a network via the communication interface 1210 and hence may not be connected to a display or a user input device. It will be appreciated, however, that in other examples, the computing-based device 1200 may comprise an input/output controller (not shown in FIG. 12) arranged to output display information to a display device which may be separate from or integral to the computing-based device 1200. The display information may provide a graphical user interface. The input/output controller may also be arranged to receive and process input from one or more devices, such as a user input device (e.g. a mouse, keyboard, camera, microphone or other sensor). In some examples the user input device detects voice input, user gestures or other user actions and provides a natural user interface (NUI). In an embodiment the display device also acts as the user input device if it is a touch sensitive display device. The input/output controller may output data to devices other than the display device in some examples, e.g. a locally connected printing device).

FIG. 13 shows a schematic diagram of an example draw tower 1300 incorporating a system for determining the amount of twist in a hollow core fiber using the methods described herein. A preform 1302 is fed from a feeding unit 1304 using a motor 1306 through a draw furnace 1308 which softens the perform allowing it to be stretched. The pulled optical fiber cools once it exits the draw furnace and forms a hardened optical fiber that is then wound up on a spool. The draw tower 1300 also comprises a spinner 1310, an arrangement 1312 for capturing micrographs and a control unit 1314.

The spinner 1310 is a mechanism for spinning the fiber 100 after it has passed through the draw furnace 1308 and may be arranged to spin the fiber in both directions (i.e. both clockwise and anticlockwise) and during the drawing of a fiber it may first spin the fiber in one direction (e.g. clockwise) and then spin it in the other direction (e.g. anticlockwise). In the example shown, the spinner 1310 is positioned after the arrangement 1312 for capturing micrographs but in other examples it may be positioned between the draw furnace 1308 and the arrangement 1312 for capturing micrographs.

The arrangement 1312 for capturing micrographs comprises a light source 202 and camera 204 as described above with reference to FIG. 2. As described above, the arrangement 1312 may comprise more than one light source and camera pair.

The control unit 1314 is configured to determine the amount of twist in a hollow core fiber using the methods described herein and provide a feedback signal 1316 to control the operation of the spinner 1310 so that the fiber twist satisfies pre-defined twist specifications. The control unit 1314 may comprise the microstructure measuring system 210 as described above with reference to FIG. 2 and/or the computing-based device 1200 as described above with reference to FIG. 12.

Alternatively or in addition to the other examples described herein, examples include any combination of the following:
Clause A. A method of detecting a twist angle in a hollow core fiber, the method comprising: receiving a micrograph of the hollow core fiber; and determining a relative angle of twist of the hollow core fiber by comparing the micrograph to a model for the hollow core fiber, wherein the model is generated from a sinogram of a reference hollow core fiber.
Clause B. The method according to clause A, wherein determining a relative angle of twist of the hollow core fiber by comparing the micrograph to a model for the hollow core fiber comprises: comparing the micrograph to the model to identify a row in the model that most closely matches the micrograph, wherein each row in the model corresponds to an angle of twist and the relative angle of twist of the hollow core fiber is the angle of twist that corresponds to the most closely matching row.
Clause C. The method according to clause B, wherein comparing the micrograph to the model to identify a row in the model that most closely matches the micrograph comprises calculating, for each row in the model a Euclidean distance between the micrograph and the row and selecting the row with the smallest Euclidean distance.
Clause D. The method according to clause A, wherein the micrograph is a first micrograph and is captured using a first camera and the method further comprising: receiving a second micrograph of the hollow core fiber captured using a second camera at substantially a same time as the capture of the first micrograph by the first camera; and wherein determining a relative angle of twist of the hollow core fiber by comparing the micrograph to a model for the hollow core fiber comprises: for each micrograph, comparing the micrograph to the model to generate a probability distribution across twist angles; combining the probability distributions for the first and second micrographs; and determining the relative angle of twist of the hollow core fiber from a maximum of the combined probability distribution.
Clause E. The method according to any of the preceding clauses, further comprising: calculating an absolute angle of twist of the hollow core fiber using the relative angle of twist and stored data.
Clause F. The method according to clause E, further comprising: determining a second relative angle of twist of the hollow core fiber by comparing the micrograph to a set of translated versions of an immediately previous micrograph of the hollow core fiber to identify a closest one of the set of translated versions of the immediately previous micrograph, wherein each of the set of translated versions of the immediately previous micrograph correspond to a different twist angle; calculating a second absolute angle of twist of the hollow core fiber using the second relative angle of twist and stored data; and generating an output absolute angle of twist by combing the calculated absolute angle of twist and second absolute angle of twist.
Clause G. The method according to clause E or F, wherein stored data comprises a previously determined absolute angle of twist of the hollow core fiber.
Clause H. The method according to clause E, wherein calculating an absolute angle of twist of the hollow core fiber using the relative angle of twist and the previously determined absolute angle of twist of the hollow core fiber comprises: calculating the absolute angle of twist by updating the previously determined absolute angle of twist to a nearest angle of twist to the previously determined absolute angle of twist that equals to the determined relative angle of twist modulo 360/R, where R is an order of rotational symmetry of the hollow core fiber.
Clause I. The method according to any of clauses A-D, further comprising: determining a second relative angle of twist of the hollow core fiber by comparing the micrograph to a set of translated versions of an immediately previous micrograph of the hollow core fiber to identify a closest one of the set of translated versions of the immediately previous micrograph, wherein each of the set of translated versions of the immediately previous micrograph correspond to a different twist angle; generating an output relative angle of twist by combing the determine relative angle of twist and second relative angle of twist; and calculating an absolute angle of twist of the hollow core fiber using the output relative angle of twist and stored data.
Clause J. The method according to any of the preceding clauses, wherein the model is generated from a sinogram of a reference hollow core fiber by: dividing the sinogram into R segments, each comprising a non-overlapping portion of the sinogram and extending over 360/R degrees, where R is an order of rotational symmetry of the hollow core fiber; and averaging corresponding pixel values of the R segments to form an averaged segment.
Clause K. The method according to clause J, wherein the model is further generated from a sinogram of a reference hollow core fiber by: centering the pixel values in the averaged segment and averaging the pixel values in the centered averaged segment with a rotated version of the centered averaged segment, the rotated version corresponding to the centered averaged segment rotated by 180 degrees.
Clause L. The method according to clause J or K, wherein the model is further generated from a sinogram of a reference hollow core fiber by either: truncating the sinogram prior to forming the R segments; or truncating the result of aligning and averaging the pixel values in the averaged segment with a rotated version of the averaged segment.
Clause M. The method according to any of the preceding clauses, wherein the hollow core fiber is an antiresonant hollow core fiber.
Clause N. The method according to any of the preceding clauses, wherein pixel values in the model are normalized.
Clause O. The method according to any of the preceding clauses, further comprising repeating the method for micrographs captured in a plurality of successive frames.
Clause P. The method according to any of the preceding clauses, wherein the hollow core fiber and the reference hollow core fiber are of a same or similar design.
Clause R. A method of detecting a twist angle in a hollow core fiber, the method comprising: receiving a micrograph of the hollow core fiber; and determining a relative angle of twist of the hollow core fiber by comparing the micrograph to a set of translated versions of an immediately previous micrograph of the hollow core fiber to identify a closest one of the set of translated versions of the immediately previous micrograph, wherein each of the set of translated versions of the immediately previous micrograph correspond to a different twist angle.
Clause S. The method according to clause R, further comprising: calculating an absolute angle of twist of the hollow core fiber using the relative angle of twist and stored data.
Clause T. A computer program comprising computer-executable instructions that, when executed by a computing system, direct the computing system to perform the method of any of the preceding clauses.
Clause U. A computer storage medium arranged to store the computer program according to clause T.
Clause V. A method of controlling fabrication of a hollow core fiber, the method comprising: detecting a twist angle in the hollow core fiber during fabrication using the method of any of clauses A-S; and adjusting drawing parameters using in the fabrication of the hollow core fiber based on the detected twist angle.
Clause W. The method according to clause V, wherein the drawing parameters comprise a rate and/or direction of rotation of a spinner used to rotate the hollow core fiber during drawing.
Clause X. The method according to clause V or W, wherein the drawing parameters are adjusted based on the detected twist angle and pre-defined criteria.
Clause Y. The method according to clause X, wherein the pre-defined criteria comprise one or more of a minimum twist angle, a maximum twist angle, a minimum rate of twist and a maximum rate of twist.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item refers to one or more of those items.

The operations of the methods described herein may be carried out in any suitable order, or simultaneously where appropriate. Additionally, individual blocks may be deleted from any of the methods without departing from the scope of the subject matter described herein. Aspects of any of the examples described above may be combined with aspects of any of the other examples described to form further examples without losing the effect sought.

The term 'comprising' is used herein to mean including the method blocks or elements identified, but that such blocks or elements do not comprise an exclusive list and a method or apparatus may contain additional blocks or elements.

Additionally, as used in this disclosure, phrases of the form "at least one of an A, a B, or a C," "at least one of A, B, and C," and the like, should be interpreted to select at least one from the group that comprises "A, B, and C." Unless explicitly stated otherwise in connection with a particular instance in this disclosure, this manner of phrasing does not mean "at least one of A, at least one of B, and at least one of C." As used in this disclosure, the example "at least one of an A, a B, or a C," would cover any of the following selections: {A}, {B}, {C}, {A, B}, {A, C}, {B, C}, and {A, B, C}.

It will be understood that the above description is given by way of example only and that various modifications may be made by those skilled in the art. The above specification, examples and data provide a complete description of the structure and use of exemplary embodiments. Although various embodiments have been described above with a certain degree of particularity, or with reference to one or more individual embodiments, those skilled in the art could make numerous alterations to the disclosed embodiments without departing from the scope of this specification.

## Claims

1. A method of detecting a twist angle in a hollow core fiber, the method comprising:
receiving a micrograph of the hollow core fiber (306); and
determining a relative angle of twist of the hollow core fiber by comparing the micrograph to a model for the hollow core fiber (308), wherein the model is generated from a sinogram of a reference hollow core fiber.

2. The method according to claim 1, wherein determining a relative angle of twist of the hollow core fiber by comparing the micrograph to a model for the hollow core fiber comprises:
comparing the micrograph to the model to identify a row in the model that most closely matches the micrograph, wherein each row in the model corresponds to an angle of twist and the relative angle of twist of the hollow core fiber is the angle of twist that corresponds to the most closely matching row.

3. The method according to claim 2, wherein comparing the micrograph to the model to identify a row in the model that most closely matches the micrograph comprises calculating, for each row in the model a Euclidean distance between the micrograph and the row and selecting the row with the smallest Euclidean distance.

4. The method according to claim 1, wherein the micrograph is a first micrograph and is captured using a first camera and the method further comprising:
receiving a second micrograph of the hollow core fiber captured using a second camera at substantially a same time as the capture of the first micrograph by the first camera (702);
and wherein determining a relative angle of twist of the hollow core fiber by comparing the micrograph to a model for the hollow core fiber comprises:
for each micrograph, comparing the micrograph to the model to generate a probability distribution across twist angles (704);
combining the probability distributions for the first and second micrographs (706); and
determining the relative angle of twist of the hollow core fiber from a maximum of the combined probability distribution (708).

5. The method according to any of the preceding claims, further comprising:
calculating an absolute angle of twist of the hollow core fiber using the relative angle of twist and stored data (310).

6. The method according to claim 5, further comprising:
determining a second relative angle of twist of the hollow core fiber by comparing the micrograph to a set of translated versions of an immediately previous micrograph of the hollow core fiber to identify a closest one of the set of translated versions of the immediately previous micrograph, wherein each of the set of translated versions of the immediately previous micrograph correspond to a different twist angle (1008);
calculating a second absolute angle of twist of the hollow core fiber using the second relative angle of twist and stored data (310); and
generating an output absolute angle of twist by combing the calculated absolute angle of twist and second absolute angle of twist (1012).

7. The method according to claim 5 or 6, wherein stored data comprises a previously determined absolute angle of twist of the hollow core fiber.

8. The method according to claim 7, wherein calculating an absolute angle of twist of the hollow core fiber using the relative angle of twist and the previously determined absolute angle of twist of the hollow core fiber comprises:
calculating the absolute angle of twist by updating the previously determined absolute angle of twist to a nearest angle of twist to the previously determined absolute angle of twist that equals to the determined relative angle of twist modulo 360/R, where R is an order of rotational symmetry of the hollow core fiber.

9. The method according to any of claims 1-4, further comprising:
determining a second relative angle of twist of the hollow core fiber by comparing the micrograph to a set of translated versions of an immediately previous micrograph of the hollow core fiber to identify a closest one of the set of translated versions of the immediately previous micrograph, wherein each of the set of translated versions of the immediately previous micrograph correspond to a different twist angle (1008);
generating an output relative angle of twist by combing the determine relative angle of twist and second relative angle of twist (1009); and
calculating an absolute angle of twist of the hollow core fiber using the output relative angle of twist and stored data (310).

10. The method according to any of the preceding claims, wherein the model is generated from a sinogram of a reference hollow core fiber by:
dividing the sinogram into R segments, each comprising a non-overlapping portion of the sinogram and extending over 360/R degrees, where R is an order of rotational symmetry of the hollow core fiber (404); and
averaging corresponding pixel values of the R segments to form an averaged segment (406).

11. The method according to claim 10, wherein the model is further generated from a sinogram of a reference hollow core fiber by:
centering the pixel values in the averaged segment and averaging the pixel values in the centered averaged segment with a rotated version of the centered averaged segment, the rotated version corresponding to the centered averaged segment rotated by 180 degrees (408).

12. The method according to claim 10 or 11, wherein the model is further generated from a sinogram of a reference hollow core fiber by either:
truncating the sinogram prior to forming the R segments (402); or
truncating the result of aligning and averaging the pixel values in the averaged segment with a rotated version of the averaged segment.

13. The method according to any of the preceding claims, wherein the hollow core fiber is an antiresonant hollow core fiber.

14. A computer program comprising computer-executable instructions that, when executed by a computing system, direct the computing system to perform the method of any of the preceding claims.

15. A computer storage medium arranged to store the computer program according to claim 14.
